(19) Europäisches Patentamt / European Patent Office / Office européen des brevets

(11) **EP 2 843 645 B1**

(12) **EUROPEAN PATENT SPECIFICATION**

(45) Date of publication and mention
of the grant of the patent:
**19.12.2018 Bulletin 2018/51**

(21) Application number: **13780760.8**

(22) Date of filing: **22.03.2013**

(51) Int Cl.:
*G08G 1/16* *(2006.01)*      *G08G 1/0967* *(2006.01)*
*G08G 1/017* *(2006.01)*      *B60W 30/14* *(2006.01)*
*G08G 1/01* *(2006.01)*      *G08G 1/00* *(2006.01)*
*G01V 99/00* *(2009.01)*      *G06F 17/18* *(2006.01)*

(86) International application number:
**PCT/JP2013/058290**

(87) International publication number:
**WO 2013/161467 (31.10.2013 Gazette 2013/44)**

(54) **PRECEDING VEHICLE SPECIFYING DEVICE**

VORRICHTUNG ZUR SPEZIFIZIERUNG EINES VORANGEHENDEN FAHRZEUGS

DISPOSITIF DE SPÉCIFICATION DE VÉHICULE PRÉCÉDENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.04.2012 JP 2012098993**

(43) Date of publication of application:
**04.03.2015 Bulletin 2015/10**

(73) Proprietor: **Toyota Jidosha Kabushiki Kaisha
Toyota-shi, Aichi 471-8571 (JP)**

(72) Inventors:
• **KINOSHITA, Mitsuhiro**
**Toyota-shi, Aichi 4700334 (JP)**
• **NEMOTO, Yusuke**
**Toyota-shi, Aichi 4718571 (JP)**

(74) Representative: **TBK
Bavariaring 4-6
80336 München (DE)**

(56) References cited:
**WO-A1-2010/137135      WO-A1-2011/124957
JP-A- 2008 046 873      JP-A- 2010 086 269
JP-A- 2010 231 358**

Description

## TECHNICAL FIELD

This invention relates to a preceding vehicle detection device for a vehicle (on which the device is installed, in other words, an own vehicle). The device specifies one vehicle (the preceding vehicle) running right in front of the own vehicle among vehicles (other vehicles) running around the own vehicle.

## BACKGROUND ART

One of conventional preceding vehicle detection devices (conventional device) is configured to calculate each speed difference $\Delta V$ between each speed of other vehicles obtained by using a sensor mounted on the own vehicle (i.e., a vehicle's own sensor) and each speed of the other vehicles obtained by using an inter-vehicle communication (i.e., a wireless communication between one vehicle to another vehicle). Next, the conventional device calculates a speed consistency $\Delta Mv$ as a function of the speed difference $\Delta V$. Furthermore, the conventional device chooses, as first candidate for the preceding vehicle, a vehicle(s) whose consistency $\Delta Mv$ is more than a threshold value.

In the case that there are two or more first candidate vehicles, the conventional device calculates each difference $\Delta S$ between each size (area) of the first candidate vehicles obtained by using the vehicle's own sensor and each (size) of the first candidate vehicles obtained by using the inter-vehicle communication. Next, the conventional device calculates a size consistency $\Delta Ms$ as a function of the size difference $\Delta S$. Furthermore, the conventional device chooses, as second candidate for the preceding vehicle, a vehicle(s) whose consistency $\Delta Ms$ is more than a threshold value among the first candidate vehicles.

In the case that there are two or more second candidate vehicles, the conventional device calculates each distance I between each position of the second candidate vehicles obtained by using the vehicle's own sensor and each position of the second candidate vehicles obtained by using the inter-vehicle communication. Next, the conventional device calculates a position consistency $\Delta Mp$ as a function of the distance I. Furthermore, the conventional device chooses, as third candidate for the preceding vehicle, a vehicle(s) whose consistency $\Delta Mp$ is more than a threshold value among the second candidate vehicles. After that, if there is one third candidate vehicle, the conventional device specifies the one vehicle as the vehicle whose parameters such as speed is detected with the vehicle's own sensor (i.e., the preceding vehicle, or a preceding communicating vehicle). For example, see the patent literature 1.

## CITATION LIST

Patent Literature 1: JP 2010-86269 A

Comparable prior art can be found in document WO 2011/124957 A1, disclosing a vehicle control apparatus, a target lead-vehicle designating apparatus, and a vehicle control method, in which relative positions and relative speeds are considered as discussed above.

## SUMMARY OF INVENTION

The conventional device, however, has a problem in terms of accuracy of specifying the preceding vehicle due to the reasons described below because of the threshold values prepared for the speed consistency $\Delta Mv$, the size consistency $\Delta Ms$ and the position consistency $\Delta Mp$ respectively.

For example in terms of speed, the threshold value for the speed consistency $\Delta Mv$ needs to be set as a value that takes into account unavoidable errors caused by detection errors of the sensors and delays in the communications (hereinafter correctively referred to as the "detection error"). Hence, there is a high possibility that a number of other vehicles are chosen as the first candidate for the preceding vehicle, which is determined based on the speed consistency $\Delta Mv$.

Similar to the above, in terms of vehicle's size, the detection error needs to be taken into account. Additionally, a number of vehicles having nearly the same size might be running around the own vehicle. Hence, it might be difficult to narrow down the first candidates for the preceding vehicle (i.e., to choose the second candidates) by using the size consistency $\Delta Ms$.

Similar to the above, in terms of vehicle's position, the detection error needs to be taken into account. Furthermore, measurement accuracy of the position by using GPS is not relatively high. As a result, it might be difficult to further narrow down the second candidates for the preceding vehicle (i.e., to choose the third candidates) by using the position consistency $\Delta Mp$.

The present invention is invented in view of the above problems. One object of the present invention is to provide a preceding vehicle detection device that can accurately specify the preceding vehicle in a short time by obtaining a plurality of kinds of statistical amounts each representing a similarity between data obtained based on a detecting device of the own vehicle and data obtained based on the inter-vehicle communication, calculating each preceding vehicle probability for each statistical amount based on the statistical amounts, calculating each final preceding vehicle probability for each other vehicle based on the preceding vehicle probability, and using the final preceding vehicle probabilities.

A preceding vehicle detection device of the present invention is a device that specifies a preceding vehicle running right in front of an own vehicle among a plurality of other vehicles running around the own vehicle. The preceding vehicle detection device of the present invention includes a data obtaining member and a specifying member.

The data obtaining member is configured to obtain:

a "first data group by using a detection device of the own vehicle, which group includes a plurality of data representing a driving status amount of one of the other vehicles running right in front of the own vehicle"; and
a "second data group, by using an inter-vehicle communication between the own vehicle and each of the other vehicles, which group includes a plurality of data representing a driving status amount of the each of the other vehicles". The data obtaining member also obtains data to identify the each of the other vehicles sending the second data group by using an inter-vehicle communication.

Examples of the driving status amount to be obtained include speed and position.

The specifying member is configured to obtain a plurality of kinds of a maximum speed difference, a maximum speed mean square error, a maximum difference of acceleration change, a minimum speed correlation coefficient, an average speed correlation coefficient, a maximum distance change error, and a maximum mean square error of relative position as statistical amounts representing a data similarity between the first data group and the second data group of the each of the other vehicles. Thus, a plurality of kinds of statistical amounts is obtained for each of the other vehicles.

Furthermore, relating to any one of the other vehicles, the specifying member is configured to obtain a preceding vehicle probability ($\alpha1, \alpha2 ... \alpha n$) for each of the obtained statistical amounts based on the each of the obtained statistical amounts and a predetermined look-up table defined in advance for the each of the statistical amounts.

Additionally, relating to any one of the other vehicles, the specifying member is configured to calculate a final preceding vehicle probability for the each of the other vehicles based on the obtained preceding vehicle probabilities. Then, the specifying member is configured to specify the preceding vehicle based on the final preceding vehicle probability.

By the above device, the preceding vehicle probability is obtained for each of the kinds of the obtained statistical amounts, depending on the kind of the each statistical amount.

As a result, the device can obtain the preceding vehicle probability properly for any one of statistical amounts (e.g., a maximum speed difference and a correlation coefficient, described below), for example depending on which case the one statistical amount belongs to among the following cases:

- the case where the statistical amount is within a range that only the statistical amount of the preceding vehicle can belong to under most traffic environment;
- the case where the statistical amount is within a range that the statistical amount of the preceding vehicle may belong to when considering mean error of data (for example, an error due to the delay of the inter-vehicle communication and a detection error of the own detection device);
- the case where the statistical amount is within a range that the statistical amount of the preceding vehicle may belong to when considering the maximum error of data; and
- the case where the statistical amount is within a range that the statistical amount of the preceding vehicle does not belong to even considering the error of data.

After that, the final preceding vehicle probability ($\alpha k$) is calculated for one other vehicle k based on the number of the preceding vehicle probabilities obtained for the other vehicle k, and the preceding vehicle is specified based on the final preceding vehicle probabilities for each of the other vehicles. In other words, the candidates of the preceding vehicle are not narrowed down based on each statistical amount, but the preceding vehicle is comprehensively specified based on the final preceding vehicle probability, which reflects the preceding vehicle probability that is properly calculated for each statistical amount. Consequently, the preceding vehicle detection device of the present invention can accurately specify the preceding vehicle in a short time.

In this case, the data included in the first data group may include a time-series data relating to speed of the one of the other vehicles running right in front of the own vehicle, and the data included in the second data group may include a time-series data relating to speed of the each of the other vehicles.

An accuracy of the data relating to speed is generally higher than that of the data relating to position obtained by using a GPS device, etc. Additionally, the data relating to position is not available under the situation that the GPS device cannot receive signals (for example, inside tunnels), but the data relating to speed is available under such situation. Hence, the device having the above configuration can specify the preceding vehicle more accurately.

The data included in the first data group may only include the "time-series data" relating to speed of the other vehicle, the data included in the second data group may only include the "time-series data" relating to speed of the each of the other vehicles.

In this case, the specifying member may preferably be configured to obtain more than two kinds of statistical amounts relating to speed, as the statistical amounts representing the data similarity (the similarity between data in the first data group and data in the second data group at the same time), based on the time-series data relating to speed of the other vehicle included in the first data group and the time-series data relating to speed of the each of the other vehicles included in the second data group.

As described above, an accuracy of the data relating to speed is generally higher than that of the data relating to position. Hence, the device having the above configuration can multilaterally specify by using "data relating to speed whose accuracy is high". As a result, the device can specify the preceding vehicle more accurately.

For example, the specifying member may be configured:

to obtain specific values in a time-series manner, based on the time-series data relating to speed of the other vehicle included in the first data group and the time-series data relating to speed of the each of the other vehicles included in the second data group, absolute values of which specific values decreases with increasing similarity between the time-series data included in the first data group and the time-series data of the each of the other vehicles included in the second data group; and

to obtain a maximum value among the values obtained in a time-series manner as one of the more than two kinds of statistical amounts relating to speed.

A representative example of this statistical amount includes a maximum speed difference (the maximum value of an absolute value of speed differences) and a maximum speed mean square error (the maximum value of a mean square error in speed), etc.

For example, the speed of the other vehicle obtained by using the detection device of the own vehicle and the speed of "the other vehicle that is not the preceding vehicle" obtained via the inter-vehicle communication may instantaneously be close to each other extremely. In other words, the data similarity of those data may instantaneously be high. However, those speeds may widely differ at a certain time when being monitored for a certain long period. To the contrary, a changing tendency of the speed of the other vehicle obtained by using the detection device of the own vehicle and that of the speed of "the other vehicle that is the true preceding vehicle" obtained via the inter-vehicle communication are generally same, and thus there is little possibility that those speeds widely differ when being monitored for a certain long period. As a result, the device of this embodiment can easily obtain significant statistical amounts to specify the preceding vehicle.

Furthermore, in view of the above truth, the specifying member may be configured:

to obtain correlation coefficients between the time-series data included in the first data group and the time-series data of the each of the other vehicles included in the second data group in a time-series manner, based on the time-series data relating to speed of the other vehicle included in the first data group and the time-series data relating to speed of the each of the other vehicles included in the second data group; and

to obtain a minimum value of the correlation coefficients (a minimum value of the correlation coefficient in speed) obtained in a time-series manner as one of the more than two kinds of statistical amounts relating to speed.

By this configuration, the device can easily obtain significant statistical amounts to specify the preceding vehicle.

In this embodiment of the preceding vehicle detection device of the present invention, the specifying member may be configured:

to calculate a value based on a product of the preceding vehicle probabilities obtained for the each of the other vehicles as the final preceding vehicle probability for the each of the other vehicles; and

to determine, when the final preceding vehicle probability is smaller than a predetermined threshold value, that the other vehicle corresponding to the final preceding vehicle probability is not the preceding vehicle.

Furthermore, the specifying member may be configured:

to calculate a value based on a product of the preceding vehicle probabilities obtained for the each of the other vehicles as the final preceding vehicle probability for the each of the other vehicles; and

to specify, when only one of the final preceding vehicle probabilities is larger than a predetermined threshold value, the other vehicle corresponding to the final preceding vehicle probability larger than the predetermined threshold value is the preceding vehicle. As a result, the device can obtain a parameter (i.e., the final preceding vehicle probability) to specify the preceding vehicle based on obtained data comprehensively, and then device can specify the preceding vehicle accurately based on the final preceding vehicle probability.

In one embodiment of the preceding vehicle detection device of the present invention, the specifying member may be configured to calculate the final preceding vehicle probability for the each of the other vehicles by correcting the product of the preceding vehicle probabilities for the each of the other vehicles depending on a number of data of same kind included in the time-series data for the each of the other vehicles.

An accuracy of each of the preceding vehicle probabilities increases with increasing number of the time-series data, and hence an accuracy of the final preceding vehicle probability also increases with increasing number of the time-series data. As a result, the device can specify the preceding vehicle more accurately in a short time.

Furthermore, the threshold value may be corrected depending on a number of data, instead of correcting the final preceding vehicle probability depending on the number of data of time-series data. In other world, the specifying member may be configured to correct the predetermined threshold value for the each of the other vehicles depending on a number of data of same kind included in the time-series data for the each of the other vehicles.

Furthermore, the specifying member may be configured:

to calculate a change amount of the speed per predetermined time of the other vehicle running right in front of the own vehicle based on the time-series data relating to speed of the other vehicle included in the first data group; and
to correct the final preceding vehicle probability or the predetermined threshold value for the each of the other vehicles by correcting the product of the preceding vehicle probabilities for the each of the other vehicles depending on the calculated change amount.

The amount of significant information to specify the preceding vehicle substantially increases with increasing amount of the change amount of the speed per predetermined time of the other vehicle running right in front of the own vehicle. As a result, the device can specify the preceding vehicle more accurately in a short time.

Furthermore, the data obtaining member may be configured:

to obtain a change amount of a speed per predetermined time of the other vehicle running right in front of the own vehicle by using the detection device of the own vehicle; and
to increase a frequency of obtaining the first data group and the second data group with increasing amount of the change amount.

The amount of significant information to specify the preceding vehicle substantially increases with increasing amount of the change amount of the speed per predetermined time of the other vehicle running right in front of the own vehicle. Hence, the frequency of obtaining the data is increased in that case. As a result, the device can obtain significant data more quickly, and thus the device can specify the preceding vehicle more accurately in a short time.

Other objects, other characteristics and advantages along therewith will be easily understood from the explanations for the embodiments of the present invention described below by referring to the drawings.

## BRIEF DESCRIPTION OF DRAWINGS

FIG. 1 is a schematic configuration diagram illustrating a vehicle on which a preceding vehicle detection device according to first embodiment of the invention is mounted and the preceding vehicle detection device.
FIG. 2 is a flowchart illustrating a routine executed by a CPU of a vehicle control ECU of FIG. 1 (this CPU is hereinafter referred to as "CPU").
FIG. 3 is a diagram illustrating data that the preceding vehicle detection device obtains.
FIG. 4 is a diagram illustrating temporal changes of a speed of the preceding vehicle and a speed of other vehicles.
FIG. 5 is a look-up table referenced by the CPU.
FIG. 6 is a table obtained by generalizing a look-up table referenced by the CPU.
FIG. 7 is a look-up table referenced by the CPU.
FIG. 8 is a look-up table referenced by the CPU.
FIG. 9 is a look-up table referenced by the CPU.
FIG. 10 is a look-up table referenced by a preceding vehicle detection device according to second embodiment of the invention.

FIG. 11 is a flowchart illustrating part of routines executed by a CPU of the preceding vehicle detection device according to the second embodiment of the invention.

FIG. 12 is a flowchart illustrating part of routines executed by a CPU of the preceding vehicle detection device according to the third embodiment of the invention.

FIG. 13 is a flowchart illustrating part of routines executed by a CPU of the preceding vehicle detection device according to the fourth embodiment of the invention.

## DESCRIPTION OF EMBODIMENTS

Hereinafter, the preceding vehicle detection devices according to the embodiments of the present invention will be described by referring to the drawings. In addition, the term "own vehicle" represents a "driver's own vehicle (on which the device is installed)", and the term "other vehicle" represents a "vehicle other than the own vehicle". Furthermore, the term "preceding vehicle" represents a "vehicle running right in front of the own vehicle and from which information obtained via the inter-vehicle communication may serve to change a way of cruise control of the own vehicle". In other words, the preceding vehicle is an "other vehicle acquired with a sensor(s) mounted on the own vehicle (i.e., own sensor(s))".

(First Embodiment)

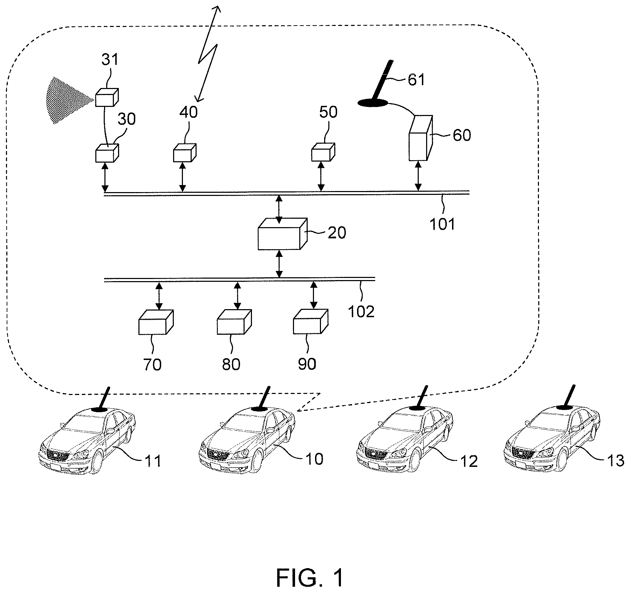

As illustrated in FIG. 1, the preceding vehicle detection device of an embodiment according to the present invention is mounted on a vehicle (own vehicle) 10. The own vehicle 10 includes a vehicle control ECU 20, a sensor ECU 30, an own sensor 31, a GPS device 40, a vehicle speed sensor 50, a wireless equipment control ECU 60, a radio antenna 61, an engine control ECU 70, a brake control ECU 80 and a steering control ECU 90. The other vehicles 11-13 also have the same configuration. In addition, the number of the other vehicles is not limited, but the other vehicles 11-13 are illustrated as an example of vehicles within an area allowing the inter-vehicle communication with the own vehicle 10.

The vehicle control ECU 20 is configured to allow data exchange (communication) between the sensor ECU 30, the GPS device 40, the vehicle speed sensor 50 and the wireless equipment control ECU 60 via the communication/sensor CAN (Controller Area Network) 101. Furthermore, the vehicle control ECU 20 is configured to allow data exchange between the engine control ECU 70, the brake control ECU 80 and the steering control ECU 90 via control CAN 102. In addition, the term "ECU" is an abbreviated expression of "electric control unit", and the ECU is an electric control circuit having, as a main component, a microcomputer including a CPU, a ROM, a RAM, an interface, etc.

The sensor ECU 30 is connected to the own sensor 31. The own sensor 31, in this embodiment, is a known millimeter-wave radar sensor. The own sensor 31 emits millimeter-wave forward of the own vehicle 10. The millimeter-wave is reflected by the preceding vehicle. The own sensor 31 receives the reflected wave. The sensor ECU 30 is configured to obtain a relative speed of the preceding vehicle, a distance to the preceding vehicle and a relative orientation of the preceding vehicle, etc., at every predetermined time in a time-series manner, based on a phase difference between the millimeter-wave emitted from the own sensor 31 and the received reflected wave, an attenuation level of the reflected wave and a detection time of the reflected wave, etc.

The GPS device 40 is a known device, which obtains latitude and longitude of the location where the own vehicle 10 is running based on GPS signals sent from artificial satellites.

The vehicle speed sensor 50 detects a speed of the own vehicle 10. The vehicle speed sensor 50 may be a sensor to detect a rotational speed of wheels and a sensor to detect a rotational speed of the propeller shaft.

In addition, the sensor ECU 30, the own sensor 31, the GPS device 40 and the vehicle speed sensor 50 configure detection system mounted on the own vehicle 10.

The wireless equipment control ECU 60 is connected to a wireless antenna 61 for the inter-vehicle communication. The wireless equipment control ECU 60 can send a plurality of kinds of data representing driving status amounts of the own vehicle 10 along with data identifying the own vehicle 10 to the other vehicles 11-13. The data representing driving status amounts include, for example, a speed of the own vehicle 10 detected with the vehicle speed sensor 50 and a location of the own vehicle 10 obtained by the GPS device 40. Furthermore, the wireless equipment control ECU 60 can receive and store a plurality of kind of data representing driving status amounts of any vehicle among the other vehicles 11-13 (hereinafter referred to as "specific vehicle") along with data identifying the specific vehicle.

The engine control ECU 70 is a known unit, which controls an internal combustion engine (not shown). The engine control ECU 70 obtains detection signals from sensors to detect kinds of engine operation status amounts and drives engine actuators (not shown).

The brake control ECU 80 is a known unit, which controls brake devices (not shown). The brake control ECU 80 obtains detection signals from sensors to detect kinds of vehicle operation status amounts and drives brake actuators (not shown).

The steering control ECU 90 is a known unit, which controls steering devices (not shown). The steering control ECU 90 obtains detection signals from sensors to detect kinds of vehicle operation status amounts and drives steering actuators (not shown).

One or more of data based on sensor signals obtained by the engine control ECU 70, the brake control ECU 80 and the steering control ECU 90 and data about status of each actuator are sent outside, as data representing the driving status amount of the own vehicle 10, by the wireless equipment control ECU 60 as necessary. To the contrary, the own vehicle 10 can obtain those data of the specific vehicle by the wireless equipment control ECU 60.

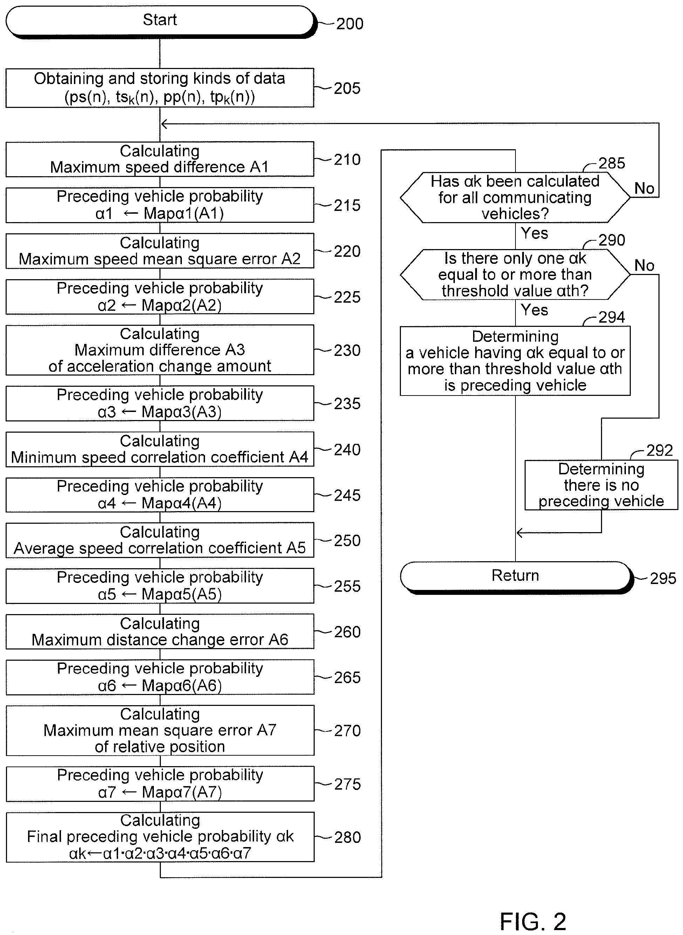

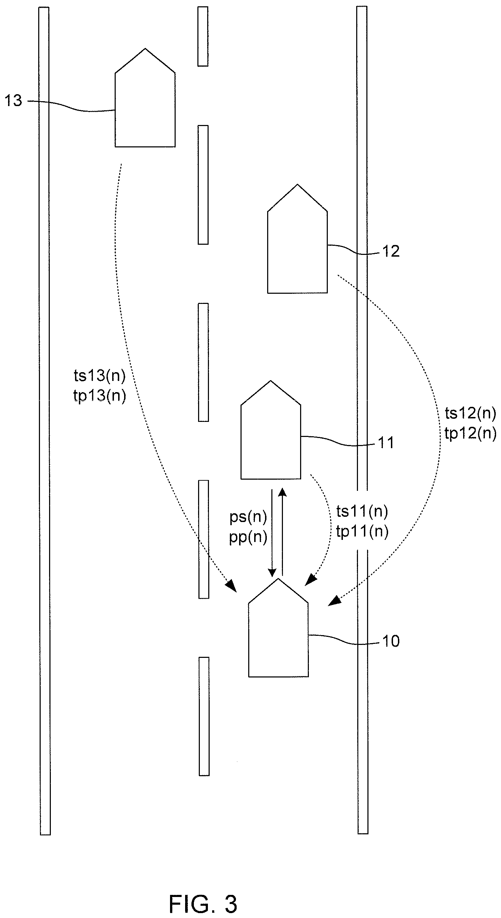

Next, operations of the preceding vehicle detection device of this embodiment will be described below. The CPU of the vehicle control ECU 20 executes the "preceding vehicle detection routine" in FIG. 2 at every predetermined time (sampling time cyctime) to operate the preceding vehicle detection device. By this routine, the CPU starts a process at step 200 at a certain time, proceeds to step 205, and then obtains kinds of data ($ps(n)$, $ts_k(n)$, $pp(n)$ and $tp_k(n)$) and data specifying other vehicle k sent via the inter-vehicle communication. These data will be described in detail below (see FIG. 3).

$ps(n)$: speed of the preceding vehicle obtained by using the own sensor 31.
$ts_k(n)$: speed of the other vehicle k obtained by using the inter-vehicle communication.
$pp(n)$: position of the preceding vehicle obtained by using the own sensor 31 and the GPS device 40.
$tp_k(n)$: position of the other vehicle k obtained by using the inter-vehicle communication.

The "n" in parentheses represents that the data therewith are the latest ones. Then, the "n-1 ", "n-2" and "n-3" represent that those data therewith are old with decreasing number in parentheses. For example, $ps(n)$ represents the latest speed of the preceding vehicle obtained with the own sensor 31, $ps(n-q)$ represents the speed of the preceding vehicle at a time "q•cyctime" before the present time obtained with the own sensor 31. These data are stored in the memory as far as the inter-vehicle communication continues. The subscript "k" is an identification sign to specify other vehicles existed around the own vehicle 10 (i.e., other vehicles running in an area where the inter-vehicle communication works). In addition, "m" hereinafter represents the number of elements used for calculating each statistical amount. When the number of element obtained for one kind of data is L, "m" is equal to or smaller than "L".

Additional explanation for the data to be obtained will be described below.

The speed $ps(n)$ of the preceding vehicle is obtained by adding "a speed of the own vehicle 10 obtained with the vehicle speed sensor 50 of the own vehicle 10" to "the relative speed of the preceding vehicle obtained with the own sensor 31".

The speed $ts_k(n)$ of the other vehicle k is a speed of the other vehicle k obtained with the vehicle speed sensor installed on the other vehicle k, and in other words, a speed of the other vehicle k sent to the own vehicle 10 via the inter-vehicle communication.

The position $pp(n)$ of the preceding vehicle is obtained by considering the position of the own vehicle 10 obtained by the GPS device 40 of the own vehicle 10 as a reference position, the distance between the own vehicle 10 and the other vehicle k, and the relative orientation each obtained with the own sensor 31.

The position $tp_k(n)$ of the other vehicle k is a position of the other vehicle k obtained with the GPS device installed on the other vehicle k, and in other words, a position of the other vehicle k sent to the own vehicle 10 via the inter-vehicle communication.

Hence, the speed $ps(n)$ and the position $pp(n)$ of the preceding vehicle are the data representing the driving status amount of the preceding vehicle, which data can be obtained by using the own detection devices (i.e., the own sensor 31, the GPS device 40 and the vehicle speed sensor 50). Furthermore, the speed $ts_k(n)$ and the position $tp_k(n)$ of the other vehicle k are the data representing the driving status amount of the other vehicle k, which data can be obtained by using the inter-vehicle communication.

Next, the CPU proceeds to step 210 to calculate a maximum speed difference A1 for the other vehicle k in accordance with the following formula (1).
Maximum speed difference A1:

$$A1 = \max( \, | \, ps(n) - ts_k(n) \, | \, , \, prenum) \quad \cdots(1)$$

In the above formula, "prenum" is the maximum speed difference A1 that was obtained during the period from the start time t0 at which the inter-vehicle communication with the other vehicle k is started to a time just before the present time tnow. In other words, the maximum speed difference A1 is the maximum value of an absolute value of the difference between the speed $ps(i)$ of the preceding vehicle and the speed $ts_k(i)$ of the other vehicle during the period from the start time t0 to the present time tnow.

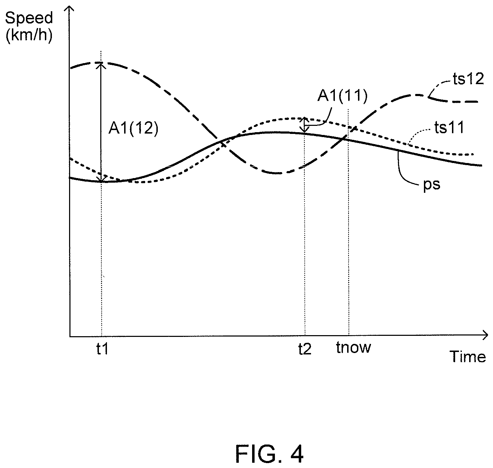

In general, the own vehicle 10 tends to run to follow the preceding vehicle. Hence, for example in the running situation illustrated in FIG. 3, the similarity between the speed of the own vehicle 10 and that of the preceding vehicle 11 is likely to be high. As a result, when the speed of the preceding vehicle obtained with the own sensor 31 changes as the line ps illustrated in FIG. 4, the speed of the other vehicle 11, which is the preceding vehicle of the own vehicle 10, may actually change as the line ts11. On the other hand, the speed of the other vehicle 12, which is not the preceding vehicle, may transit as the line 12 with low similarity between the speed ps of the preceding vehicle obtained with the own sensor 31. However, in terms of the absolute value of the speed difference at the present time tnow as the conventional device, the speed ts12 of the other vehicle 12 is closer than the speed ts11 of the other vehicle 11 to the speed ps of the preceding vehicle. Consequently, if the preceding vehicle of the own vehicle 10 is specified only by using the absolute value of the speed difference at the present time tnow, the other vehicle 12 may be wrongly determined as the preceding vehicle of the own vehicle 10.

To the contrary, the maximum speed difference A1(11) of the other vehicle 11 is a small value at time t2, the maximum speed difference A1(12) of the other vehicle 12 is a large value at time t1. As is clear from the above, the maximum speed difference A1 is a statistical amount that decreases with increasing similarity between the "speed of the other vehicle k" and the "speed of the preceding vehicle calculated with the detection device of the own vehicle 10".

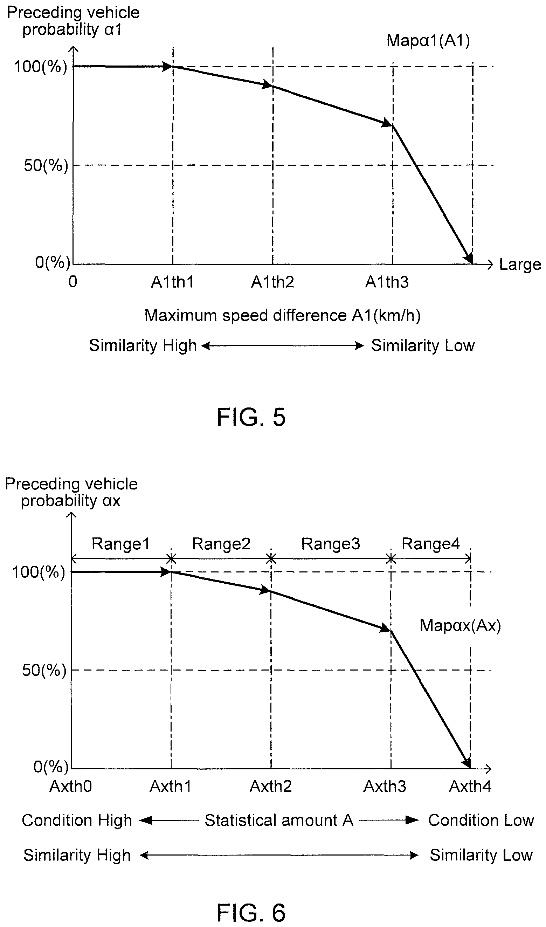

Referring to FIG. 2 again, the CPU proceeds to step 215 to obtain a preceding vehicle probability $\alpha1$ (a probability that the other vehicle k is the preceding vehicle) based on the maximum speed difference A1 of the other vehicle k. In particular, the CPU applies the maximum speed difference A1 to the look-up table (map) Map $\alpha1$(A1) illustrated in FIG. 5 to obtain the preceding vehicle probability $\alpha1$.

As described above, the maximum speed difference A1 is a statistical amount that decreases with increasing similarity between the "speed of the other vehicle k" and the "speed of the preceding vehicle calculated with the detection device of the own vehicle 10". Hence, the preceding vehicle probability $\alpha1$ is 100% when the maximum speed difference A1 is equal to or smaller than the first threshold value A1th1 according to the table Map $\alpha1$(A1). In other words, the condition that the maximum speed difference A1 is equal to or smaller than the first threshold value A1th1 is a condition that only the preceding vehicle can satisfy under most traffic environment.

Furthermore, according to the table Map $\alpha1$(A1), the preceding vehicle probability $\alpha1$ gradually decreases from 100% to 90% with increasing amount of the maximum speed difference A1 when the maximum speed difference A1 is "larger than the first threshold value A1th1 but equal to or smaller than the second threshold value A1th2". The second threshold value A1th2 is larger than the first threshold value A1th1. In other words, the condition that the maximum speed difference A1 is larger than the first threshold value A1th1 but equal to or smaller than the second threshold value A1th2 is a condition that the preceding vehicle can satisfy when considering mean error of data (for example, an average value of error due to the delay of the inter-vehicle communication and the individual difference of the own sensor 31). As a result, the other vehicle k, which is not the preceding vehicle, can satisfy this condition with a certain probability (a relatively low probability).

Additionally, according to the table Map $\alpha1$(A1), the preceding vehicle probability $\alpha1$ gradually decreases from 90% to 80% with increasing amount of the maximum speed difference A1 when the maximum speed difference A1 is "larger than the second threshold value A1th2 but equal to or smaller than the third threshold value A1th3". The third threshold value A1th3 is larger than the second threshold value A1th2. In other words, the condition that the maximum speed difference A1 is larger than the second threshold value A1th2 but equal to or smaller than the third threshold value A1th3 is a condition that the preceding vehicle can satisfy when considering the maximum error of data (for example, a maximum value of error due to the delay of the inter-vehicle communication and the individual difference of the own sensor 31). As a result, the other vehicle k, which is not the preceding vehicle, can satisfy this condition with a relatively high probability.

Furthermore, according to the table Map $\alpha1$(A1), the preceding vehicle probability $\alpha1$ rapidly decreases from 80% with increasing amount of the maximum speed difference A1 when the maximum speed difference A1 is larger than the third threshold value A1th3. In other words, the condition that the maximum speed difference A1 is larger than the third threshold value A1th3 is a condition that the preceding vehicle rarely satisfies.

As described above, the CPU obtains the statistical amount Ax representing the similarity (a statistical amount that varies depending on the similarity, for example the maximum speed difference A1) between a plurality of time-series data representing the driving status amount of the preceding vehicle obtained by using the detection device of the own vehicle (for example, ps(n), ps(n-1), ps(n-2)...) and a plurality of time-series data representing the driving status amount of the other vehicle k obtained by using the inter-vehicle communication (for example, $ts_k$(n), $ts_k$(n-1), $ts_k$(n-2)...).

Furthermore, the CPU applies the statistical amount Ax to a conversion table Mapax(Ax) for preceding vehicle probability, for example as generalized and illustrated in FIG. 6, to calculate a probability $\alpha x$ (preceding vehicle probability) that the other vehicle k is the preceding vehicle based on the statistical amount Ax. The conversion table Mapax(Ax) separates the statistical amount Ax into the four ranges described below, as in the table of FIG. 5, and defines the preceding vehicle probability $\alpha x$ depending on each range. In addition, the probability $\alpha x$ is calculated based on the following concept, and the concept is applied to the other statistical amounts as well.

Range 1 (Axth0 - Axth1): This range represents that only the statistical amount Ax of the preceding vehicle can belong under most traffic environment. The preceding vehicle probability αx is determined as 100% when the statistical amount Ax is within the range 1.

Range 2 (Axth1 - Axth2): This range represents that the statistical amount Ax of the preceding vehicle can belong when considering the mean error of data (for example, an average value of error due to the delay of the inter-vehicle communication and the individual difference of the detection devices of the own vehicle). The preceding vehicle probability αx is determined as a value from a first probability to 100% when the statistical amount Ax is within the range 2. For example, the first probability is 90%.

Range 3 (Axth2 - Axth3): This range represents that the statistical amount Ax of the preceding vehicle can belong when considering the maximum error of data (for example, a maximum value of error due to the delay of the inter-vehicle communication and the individual difference of the detection devices of the own vehicle). The preceding vehicle probability αx is determined as a value from a "second probability that is smaller than the first probability" to the "first probability" when the statistical amount Ax is within the range 3. For example, the second probability is 80%.

Range 4 (Axth3 - Axth4): This range represents that the statistical amount Ax of the preceding vehicle rarely belongs. Hence, the preceding vehicle probability αx is determined as a smaller value than the second probability when the statistical amount Ax is within the range 4. Furthermore, the preceding vehicle probability αx rapidly decreases with increasing amount of the difference between the statistical amount Ax and the boundary value (Axth3) of the range 3 and the range 4.

Next, the CPU proceeds to step 220 to calculate a maximum speed mean square error A2 for the other vehicle k in accordance with the following formula (2).

Maximum speed mean square error A2

$$A2 = \max\left(\sqrt{\sum_{i=1}^{m}(ps(i) - ts_k(i))^2 / m},\ \text{prenum}\right) \quad \cdots (2)$$

In the above formula, "prenum" is the maximum speed mean square error A2 that was obtained during the period from the start time t0 at which the inter-vehicle communication with the other vehicle k is started to a time just before the present time tnow. In other words, the maximum speed mean square error A2 is the maximum value of mean square errors calculated from the latest m values of the speed ps(i) of the preceding vehicle and the latest m values of the speed $ts_k(i)$ of the other vehicle k during the period from the start time t0 to the present time tnow.

The maximum speed mean square error A2 becomes a large value when there is a continuous speed difference even if the maximum speed difference A1 does not become a relatively significantly large value. As a result, the maximum speed mean square error A2 is a statistical amount that decreases with increasing similarity between the "speed of the other vehicle k" and the "speed of the preceding vehicle calculated with the detection device of the own vehicle 10".

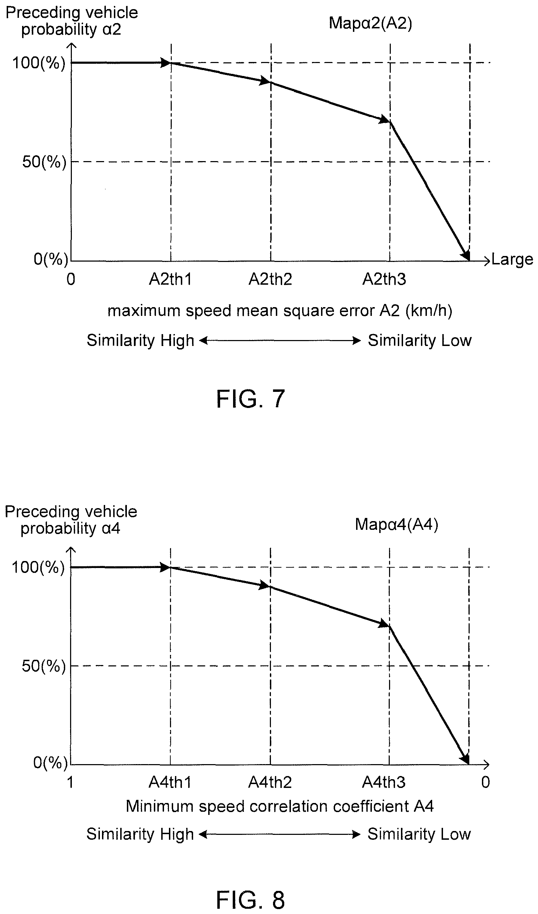

Next, the CPU proceeds to step 225 to obtain the preceding vehicle probability α2 based on the maximum speed mean square error A2 for the other vehicle k. In particular, the CPU applies the maximum speed mean square error A2 to a table Mapα2(A2) illustrated in FIG. 7 to obtain a preceding vehicle probability α2. In FIG. 7, the range from "0" to the threshold value A2th1 corresponds to the range 1, the range from the threshold value A2th1 to the threshold value A2th2 corresponds to the range 2, the range from the threshold value A2th2 to the threshold value A2th3 corresponds to the range 3, and the range beyond the threshold value A2th3 corresponds to the range 4.

Next, the CPU proceeds to step 230 to calculate the maximum difference A3 of acceleration change amounts for the other vehicle k in accordance with the following formula (3).

Maximum difference A3 of acceleration change amount

$$A3 = \max\left(\left|\sum_{i=1}^{m}((ps(i+1) - ps(i)) - (ts_k(i+1) - ts_k(i)))/m\right|,\ \text{prenum}\right) \quad \cdots (3)$$

In the above formula, ps(i+1)-ps(i) is a value that corresponds to a change amount per unit time of the speed (i.e., acceleration) of the preceding vehicle, which amount is obtained with the own sensor 31. $ts_k(i+1)-ts_k(i)$ is a value that corresponds to a change amount per unit time of the speed (i.e., acceleration) of the other vehicle k, which amount is obtained by using the inter-vehicle communication. "prenum" is the maximum difference A3 of acceleration change amount that was obtained during the period from the start time t0 at which the inter-vehicle communication with the other vehicle k is started to a time just before the present time tnow. In other words, the maximum difference A3 of acceleration change amount is the maximum value of an absolute value of an average value of the difference between an "acceleration of the other vehicle k calculated based on the speed ps(i) of the preceding vehicle" and an "acceleration of the other vehicle k calculated based on the speed $ts_k(i)$ of the other vehicle k", and the maximum difference A3 is the maximum value thereof during the period from the start time t0 to the present time tnow. The maximum difference A3 of acceleration change amount is a statistical amount that decreases with increasing similarity between the "speed of the other vehicle k" and the "speed of the preceding vehicle calculated with the detection device of the own vehicle 10".

Next, the CPU proceeds to step 235 to obtain the preceding vehicle probability $\alpha 3$ based on the maximum difference A3 of acceleration change amount. In particular, the CPU obtains the preceding vehicle probability $\alpha 3$ by applying the maximum difference A3 to a table Map$\alpha 3$(A3) (not shown) of which characteristic is the same as the table in FIG. 6.

Next, the CPU proceeds to step 240 to calculate a minimum speed correlation coefficient A4 for the other vehicle k in accordance with the following formula (4).

Minimum speed correlation coefficient A4

$$A4 = \min\left(coef(ps(m), ts_k(m)), prenum\right)$$

where

$$coef(ps(n), ts_k(n)) = \frac{\sum_{i=1}^{n} (ps(i) - ave(ps(n)))\,(ts_k(i) - ave(ts_k(n)))}{\sqrt{\sum_{i=1}^{n}(ps(i) - ave(ps(n)))^2 \sum_{i=1}^{n}(ts_k(i) - ave(ts_k(n)))^2}} \quad \cdots(4)$$

In the above formula, "prenum" is the "minimum speed correlation coefficient A4" that was obtained during the period from the start time t0 at which the inter-vehicle communication with the other vehicle k is started to a time just before the present time tnow. In other words, the minimum speed correlation coefficient A4 is the "minimum value" of the correlation coefficient coef of the latest m values of the speed ps(i) of the preceding vehicle and the latest m values of the speed $ts_k(i)$ of the other vehicle k "during the period from the start time t0 to the present time tnow". In addition, ave(x) represents an average value of parameter x in the formula (4) and the following formulae.

The correlation coefficient coef is, as is known, a statistical amount representing a correlation (degree of similarity) between two parameters. The correlation coefficient is an actual number from -1 to 1 in principal, and when the correlation coefficient is closer to 1 the two parameters have a strong positive correlation, in other words, the similarity of the two parameters is high. When the correlation coefficient is closer to zero, the two parameters have a weak correlation. When the correlation coefficient is closer to -1, the two parameters have a strong negative correlation. Hence, in this embodiment, when the minimum speed correlation coefficient A4 is closer to 1, the similarity between the speed ps(i) of the preceding vehicle and the speed $ts_k(i)$ of the other vehicle k.

Next, the CPU proceeds to step 245 to obtain the preceding vehicle probability $\alpha 4$ based on the minimum speed correlation coefficient A4 for the other vehicle k. In particular, the CPU applies the minimum speed correlation coefficient A4 to a table Map$\alpha 4$(A4) illustrated in FIG. 8 to obtain a preceding vehicle probability $\alpha 4$. In FIG. 8, the range from "1" to the "threshold value A4th1 that is smaller than 1" corresponds to the range 1, the range from the threshold value A4th1 to the threshold value A4th2 smaller than threshold value A4th1 corresponds to the range 2, the range from the threshold value A4th2 to the threshold value A4th3 smaller than threshold value A4th2 corresponds to the range 3, and the range smaller than the threshold value A4th3 corresponds to the range 4.

Next, the CPU proceeds to step 250 to calculate an average speed correlation coefficient A5 for the other vehicle k in accordance with the following formula (5).

**Average speed correlation coefficient A5**

$$A5 = ave\left(coef(ps(m), ts_k(m))\right) \qquad \cdots(5)$$

In the above formula, the average speed correlation coefficient A5 is the "average value" of the correlation coefficient of the latest m values of the speed ps(i) of the preceding vehicle and the latest m values of the speed $ts_k(i)$ of the other vehicle k "during the period from the start time t0 to the present time tnow". Hence, in this embodiment, when the average speed correlation coefficient A5 is closer to 1, the similarity between the speed ps(i) of the preceding vehicle and the speed $ts_k(i)$ of the other vehicle k.

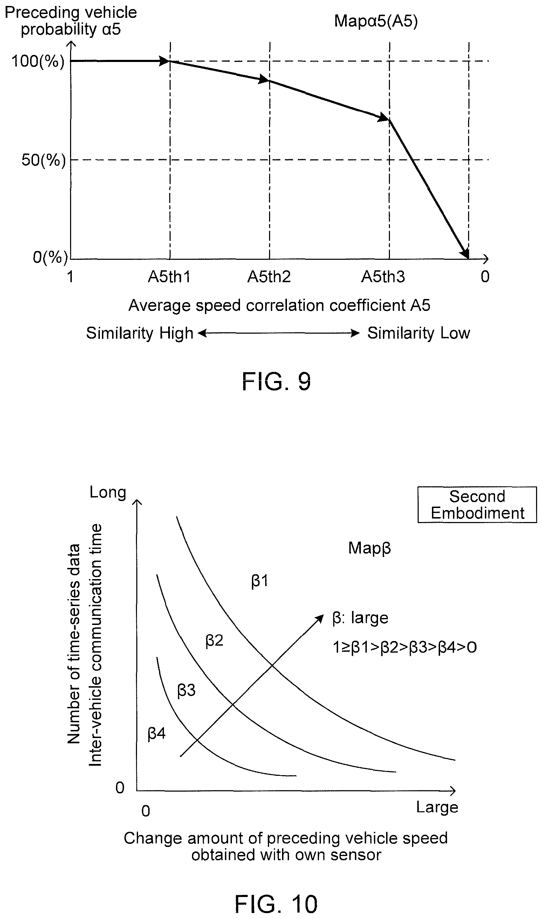

Next, the CPU proceeds to step 255 to obtain the preceding vehicle probability $\alpha 5$ based on the average speed correlation coefficient A5 for the other vehicle k. In particular, the CPU applies the average speed correlation coefficient A5 to a table Map$\alpha 5$(A5) illustrated in FIG. 9 to obtain a preceding vehicle probability $\alpha 5$. In FIG. 9, the range from "1" to the "threshold value A5th1 that is smaller than 1" corresponds to the range 1, the range from the threshold value A5th1 to the threshold value A5th2 smaller than threshold value A5th1 corresponds to the range 2, the range from the threshold value A5th2 to the threshold value A5th3 smaller than threshold value A5th2 corresponds to the range 3, and the range smaller than the threshold value A5th3 corresponds to the range 4.

Next, the CPU proceeds to step 260 to calculate a maximum distance change error A6 for the other vehicle k in accordance with the following formula (6). In the following formula (6), $(ps(i)-ts_k(i)) \cdot cyctime$ represents a "change amount of the distance between the preceding vehicle and the other vehicle k obtained with the own sensor 31" during a sampling time cyctime.

Maximum distance change error A6

$$A6 = \max\left(\left|\sum_{i=1}^{m} ((ps(i) - ts_k(i))(cyctime)\right|, prenum\right) \quad \cdots (6)$$

Furthermore, "prenum" is the maximum distance change error A6 that was obtained during the period from the start time t0 at which the inter-vehicle communication with the other vehicle k is started to a time just before the present time tnow. In other words, the maximum distance change error A6 is the maximum value of the distance change error (an integrated value of the change amount of the distance between the preceding vehicle and the other vehicle k obtained with the own sensor 31) during the period in which m data are obtained. Hence, the maximum distance change error A6 is a statistical amount that decreases with increasing similarity between the "speed of the other vehicle k" and the "speed of the preceding vehicle calculated with the detection device of the own vehicle 10".

Next, the CPU proceeds to step 265 to obtain the preceding vehicle probability $\alpha6$ based on the maximum distance change error A6. In particular, the CPU obtains the preceding vehicle probability $\alpha6$ by applying the maximum distance change error A6 to a table $Map\alpha6(A6)$ (not shown) of which characteristic is the same as the table in FIG. 6.

Next, the CPU proceeds to step 270 to calculate a maximum mean square error A7 of relative position for the other vehicle k in accordance with the following formula (7).

**Maximum mean square error A7 of relative position**

$$A7 = \max\left(\sqrt{\sum_{i=1}^{m} (pp(i) - tp_k(i))^2 / m}, \; prenum\right) \quad \cdots (7)$$

In the above formula, "prenum" is the maximum mean square error A7 of relative position that was obtained during the period from the start time t0 at which the inter-vehicle communication with the other vehicle k is started to a time just before the present time tnow. In other words, the maximum mean square error A7 is the maximum value of the mean square error of the latest m values of the position pp(i) of the preceding vehicle and the latest m values of the position $tp_k(i)$ of the other vehicle k during the period from the start time t0 to the present time tnow.

The maximum mean square error A7 becomes a large value when there is a continuous position difference between the position pp(i) of the preceding vehicle and the position $tp_k(i)$ of the other vehicle k. As a result, the maximum mean square error A7 is a statistical amount that decreases with increasing similarity between the "position of the other vehicle k" and the "position of the preceding vehicle acquired with the detection device of the own vehicle 10".

Next, the CPU proceeds to step 275 to obtain the preceding vehicle probability $\alpha7$ based on the maximum mean square error A7 of relative position. In particular, the CPU obtains the preceding vehicle probability $\alpha7$ by applying the maximum mean square error A7 to a table $Map\alpha7(A7)$ (not shown) of which characteristic is the same as the table in FIG. 6.

Next, the CPU proceeds to step 280 to calculate a final preceding vehicle probability $\alpha k$ in accordance with the following formula (8). The final preceding vehicle probability $\alpha k$ is a product of the preceding vehicle probability $\alpha1$ to $\alpha7$, and hence the probability $\alpha k$ increases (i.e., is closer to 1) with increasing possibility that the other vehicle k is the preceding vehicle.

**Final preceding vehicle probability alfak**

$$\alpha k = \alpha1 \cdot \alpha2 \cdot \alpha3 \cdot \alpha4 \cdot \alpha5 \cdot \alpha6 \cdot \alpha7 \quad \cdots (8)$$

Next, the CPU proceeds to step 285 to determine whether or not the final preceding vehicle probabilities $\alpha k$

have already been calculated for all other vehicles to which the inter-vehicle communication works at the present time. When this condition is not satisfied, the CPU returns to step 210 to calculate the final preceding vehicle probability for other vehicles. In addition, the CPU may calculate the preceding vehicle probabilities for each statistical amount and the final preceding vehicle probabilities for all other vehicles to which the inter-vehicle communication from the own vehicle 10 works in a simultaneous parallel manner.

To the contrary, when the final preceding vehicle probabilities $\alpha k$ have already been calculated for all other vehicles to which the inter-vehicle communication works at the present time, the CPU determines as "Yes" at step 285 to proceeds to step 290 and determines whether or not there is only one other vehicle that has the final preceding vehicle probability $\alpha k$ equal to or more than a predetermined threshold value (final determination threshold value) $\alpha th$.

When there is a plurality of other vehicles having the final preceding vehicle probability $\alpha k$ equal to or more than the threshold value $\alpha th$, or when there is no other vehicle having the final preceding vehicle probability $\alpha k$ equal to or more than the threshold value $\alpha th$, the CPU determines as "No" at step 290 to proceeds to step 290 and determines that there is no preceding vehicle (preceding vehicle to which the inter-vehicle communication works). After that, the CPU proceeds to step 295 to end this routine once.

To the contrary, when there is only one other vehicle having the final preceding vehicle probability $\alpha k$ equal to or more than the threshold value $\alpha th$, the CPU determines as "Yes" at step 290 to proceeds to step 294 and determines that the other vehicle k, which has the final preceding vehicle probability $\alpha k$ equal to or more than the threshold value $\alpha th$, is the preceding vehicle. After that, the CPU proceeds to step 295 to end this routine once.

In addition, the CPU may determine "whether or not the final preceding vehicle probability $\alpha k$ is equal to or more than the threshold value $\alpha th$" after processing step 280 and then determines that the other vehicle k having the preceding vehicle probability $\alpha k$ equal to or more than the threshold value ath is not the preceding vehicle.

As described above, the preceding vehicle detection device according to the first embodiment of the present invention has the data obtaining member and the specifying member.

The data obtaining member obtains: a first data group by using a detection device of the own vehicle 10 (the own sensor 31, the GPS device 40 and the vehicle speed sensor 50, etc.), which data group includes a plurality of data $(ps(n), pp(n))$ representing a driving status amount of one of the other vehicles running right in front of the own vehicle 10; and a second data group, by using an inter-vehicle communication between the own vehicle 10 and each of the other vehicles, along with data to identify the each of the other vehicles sending the second data group, which data group includes a plurality of data $(ts_k(n), tp_k(n))$ representing a driving status amount of the each of the other vehicles (see step 205 in FIG. 2).

The specifying member specifies the preceding vehicle by the following steps (see steps 290, 292 and 294 in FIG. 2): obtaining a plurality of kinds of statistical amounts (A1 to A7) representing a data similarity between the first data group and the second data group of the each of the other vehicles (see steps 210, 220, 230, 240, 250, 260 and 270 in FIG. 2); obtaining a preceding vehicle probability ($\alpha1$ to $\alpha7$) for each of the obtained statistical amounts based on the each of the obtained statistical amounts (A1 to A7) and a "predetermined relationship (table Mapah(Ah): h represents integer numbers 1 to 7) defined in advance for the each of the statistical amounts" (see steps 215, 225, 235, 245, 255, 265 and 275 in FIG. 2); calculating a final preceding vehicle probability for the each of the other vehicles based on the obtained preceding vehicle probabilities (see steps 280 and 285 in FIG. 2); and specifying the preceding vehicle based on the final preceding vehicle probability.

Hence, the preceding vehicle probability is accurately calculated for each of the statistical amounts, the final preceding vehicle probability $\alpha k$ for the other vehicle k is determined based on the preceding vehicle probability. Furthermore, the preceding vehicle is specified based on the final preceding vehicle probability $\alpha k$. As a result, the preceding vehicle detection device according to the first embodiment of the present invention can accurately specify the preceding vehicle in a short time.

Furthermore, the specifying member is configured to obtain more than two kinds of statistical amounts relating to speed (see fig. 2, for example the maximum speed difference A1, the maximum speed mean square error A2, the maximum difference A3 of acceleration change amount, the minimum speed correlation coefficient A4 and the average speed correlation coefficient A5, and the maximum distance change error A6), as the statistical amounts representing the data similarity at a same time (same time-series), based on the time-series data relating to speed of the other vehicle (e.g., $ps(n), ps(n-1), ps(n-2)...$) included in the first data group and the time-series data relating to speed of the each of the other vehicles (e.g., $ts_k(n), ts_k(n-1), ts_k(n-2)...$) included in the second data group.

An accuracy of the "data relating to speed obtained with own sensor or the vehicle speed sensor" is generally higher than that of the "data relating to position obtained by using the GPS device". Hence, the device of the first embodiment can multilaterally determine whether or not each of the other vehicles is the preceding vehicle by using the "data relating to speed having a high accuracy". As a result, the device can accurately specify the preceding vehicle. in addition, when the data relating to position $(pp(n)$ and $tp_k(n))$ obtained with a "GPS device of the own vehicle 10" and/or a "a GPS device of the other vehicle and the inter-vehicle communication" cannot be obtained, the preceding vehicle detection device according to the first embodiment may set a constant value for all data corresponding to the not-obtained data.

(Second Embodiment)

Next, a preceding vehicle detection device according to the second embodiment of the present invention (hereinafter referred to as "second device") will be described below. The second device is different from the preceding vehicle detection device according to the first embodiment in considering the following two points to shorten the time to specify the preceding vehicle.

1. The longer the time to obtain data is (i.e., the more the time-series data of the same kind is obtained), the higher the reliability of the statistical amount may be.
2. The statistical amount (especially, statistical amounts relating to the correlation coefficient) with higher reliability may be obtained when the driving status amount (especially, speed) changes, compared to when the speed does not change.

The second device calculates the final preceding vehicle probability $\alpha k$, which is used when specifying the preceding vehicle, by obtaining a compensation coefficient $\beta$ by applying an inter-vehicle communication time (in other words, a number of time-series data of the same kind) and a change amount $\Delta tks$ per unit time of the preceding vehicle speed obtained with the own sensor 31 to the look-up table Map$\beta$ illustrated in FIG. 10, and correcting the final preceding vehicle probability $\alpha k$ by using the compensation coefficient $\beta$.

In accordance with the table Map$\beta$, the compensation coefficient $\beta$ is determined to increase, within the range of larger than zero and equal to or smaller than 1, with increasing length of the inter-vehicle communication time and with increasing amount of change per unit (predetermined) time of the preceding vehicle speed obtained with the own sensor 31.

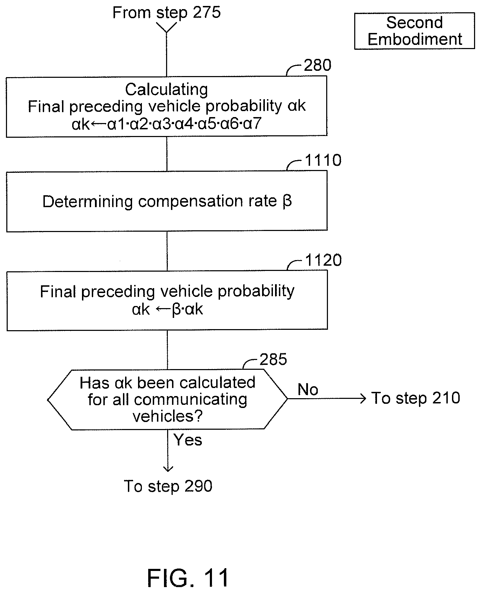

In particular, the CPU of the second device executes the processes of step 1110 and step 1120 illustrated in FIG. 11 between step 280 and step 285 of FIG. 2. In other words, the CPU calculates the final preceding vehicle probability $\alpha k$ at step 280 and proceeds to step 1110 to calculate the compensation coefficient $\beta$ by applying the inter-vehicle communication time and change amount $\Delta tks$ to the table Map$\beta$.

Next, the CPU proceeds to step 1120 to calculate the compensated final preceding vehicle probability $\alpha k$ by multiplying final preceding vehicle probability $\alpha k$ obtained at step 280 by the compensation coefficient $\beta$. After that, the CPU proceeds to step 285 and specifies the preceding vehicle by using the compensated final preceding vehicle probability $\alpha k$. As a result, the second device can accurately specify the preceding vehicle promptly.

In addition, the second device may determine the compensation coefficient $\beta$ only based on the inter-vehicle communication time (in other words, the number of the time-series data of the same kind). In this case, the compensation coefficient $\beta$ is calculated to increase with increasing length of the inter-vehicle communication time. Furthermore, the second device may determine the compensation coefficient $\beta$ only based on the change amount $\Delta tks$. In this case, the compensation coefficient $\beta$ is calculated to increase with increasing amount of the change amount $\Delta tks$.

Furthermore, the compensation coefficient $\beta$ may be determined to decrease with increasing length of the inter-vehicle communication time and/or with increasing amount of the change amount $\Delta tks$, in the case that the predetermined threshold value ath is set to a relatively small value. Thereby, the number of other vehicles having the final preceding vehicle probability $\alpha k$ over the threshold value ath can be quickly narrowed down to one vehicle. In addition, the change amount $\Delta tks$ may be replaced with the maximum value of an absolute value of the change amount $\Delta tks$ during the period from the start time t0 at which the inter-vehicle communication is started to the present time tnow.

(Third Embodiment)

Next, a preceding vehicle detection device according to the third embodiment of the present invention (hereinafter referred to as "third device") will be described below. The third device is different from the second device in that the predetermined threshold value ath is compensated by a compensation coefficient $\gamma$ instead of correcting the final preceding vehicle probability $\alpha k$ by the compensation coefficient $\beta$. This compensation coefficient $\gamma$ may be determined to decrease with increasing length of the inter-vehicle communication time and/or with increasing amount of the change amount $\Delta tks$. However, the compensation coefficient $\gamma$ may be determined to increase with increasing length of the inter-vehicle communication time and/or with increasing amount of the change amount $\Delta tks$, in the case that the predetermined threshold value ath is set to a relatively small value. Furthermore, the change amount $\Delta tks$ may be replaced with the maximum value of an absolute value of the change amount $\Delta tks$ during the period from the start time t0 at which the inter-vehicle communication is started to the present time tnow.

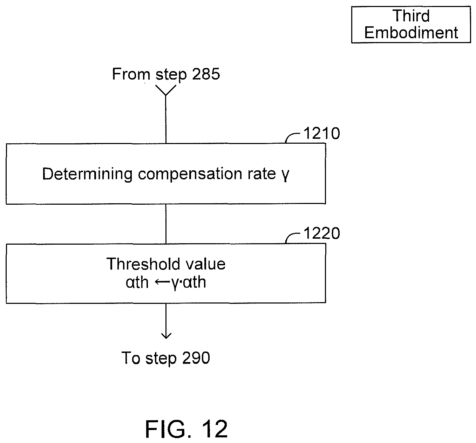

In particular, the CPU of the third device executes the processes of step 1210 and step 1220 illustrated in FIG. 12 between step 285 and step 290 of FIG. 2. In other words, when the CPU determines as "Yes" at step 285, the CPU proceeds to step 1210 in FIG. 12 to calculate the compensation coefficient γ so as to decrease with increasing length of the inter-vehicle communication time and/or with increasing amount of the change amount Δtks.

Next, the CPU proceeds to step 1220 to calculate the compensated threshold value ath by multiplying the predetermined threshold value ath by the compensation coefficient γ. After that, the CPU proceeds to step 290 and specifies the preceding vehicle by using the compensated threshold value αth. As a result, the third device can accurately specify the preceding vehicle promptly.

(Fourth Embodiment)

Next, a preceding vehicle detection device according to the fourth embodiment of the present invention (hereinafter referred to as "fourth device") will be described below. The data obtaining member of the fourth device obtains the change amount per predetermined time of the speed of the other vehicle, which is obtained by using the own sensor 31, and then increases the frequency of obtaining the first data group (ps(n), pp(n)) and the second data group (ts$_k$(n), tp$_k$(n)) with increasing amount of the change amount.

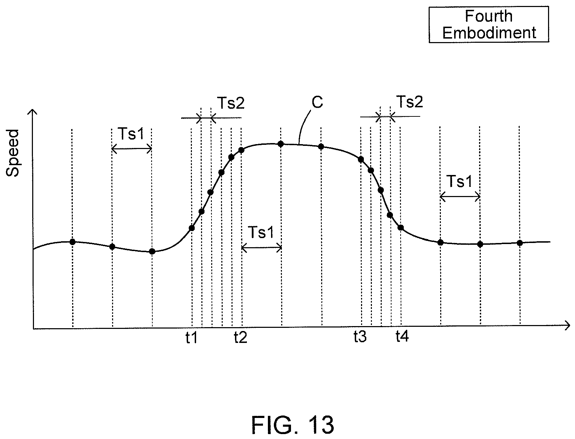

In particular, as illustrated in FIG. 13, in the case that the speed v of the other vehicle obtained by using the own sensor 31 changes (see the line C), a sampling time Ts for each data (ps(n), ts$_k$(n), pp(n) and tp$_k$(n)) is set to a relatively long time Ts1 during a period in which the change amount Δv of the speed v per predetermined time is smaller than the threshold value Δvth (e.g., before the time t1, the time t2 to the time t3, and after the time t4). To the contrary, a sampling time Ts for each data (ps(n), ts$_k$(n), pp(n) and tp$_k$(n)) is set to a relatively short time "Ts2 that is shorter than Ts1" during a period in which the change amount Δv of the speed v per predetermined time is larger than the threshold value Δvth (e.g., the time t1 to the time t2, and the time t3 to the time t4). In other words, the frequency of obtaining data is increased during the period in which the change amount Δv of the speed v is large compared with the other period. Thereby, the device can obtain a significant data more quickly and thus accurately specify the preceding vehicle promptly.

As described above, the preceding vehicle detection devices according to the embodiments of the present invention can accurately and promptly specify the preceding vehicle (communicable preceding vehicle), which is running right in front of the own vehicle 10 and to which the inter-vehicle communication works.

The present invention is not limited within the above specific embodiments, various modifications corrections may be made without departing from the scope of the invention. For example, the own sensor 31 of the embodiments is a millimeter-wave radar sensor, but a forward-looking camera (especially, a stereo camera) may be employed.

The fourth device is configured to increase the frequency of obtaining data when the change amount per predetermined time of the speed of the other vehicle, which is obtained by the own sensor 31, is large. However, the fourth device may be configured to predict the case where the change amount of the speed of the preceding vehicle based on traffic conditions in front of the own vehicle (for example, whether or not there is a traffic jam in front of the own vehicle, whether or not a traffic light changes to red in front of the own vehicle), and then increase the frequency of obtaining data in that case.

Furthermore, the final preceding vehicle probability αk of the embodiments is the product of the preceding vehicle probability α1 to α7. However, the final preceding vehicle probability αk may be calculated as the sum of the preceding vehicle probability α1 to α7. Furthermore, the statistical amount of the embodiment is the statistical amount A1 to A7. However, any of these (but a plurality of kinds of statistical amounts) may be used.

Additionally, the own vehicle 10 on which the preceding vehicle detection device may change the driving status amount, after specifying the preceding vehicle, based on the driving status amount of the preceding vehicle sent from it via the inter-vehicle communication (for example, a brake pedal operation amount, an accelerator pedal operation amount AP, and a steering angle).

**Claims**

1. A preceding vehicle detection device specifying a preceding vehicle running right in front of an own vehicle (10) among a plurality of other vehicles (k) running around the own vehicle (10),
   the device comprises:

   a data obtaining member configured to obtain: a first data group by using a detection device (31, 40, 50) of the own vehicle (10), the first data group including a plurality of data (ps(n), pp(n)) representing a driving status amount of one of the other vehicles (k) running right in front of the own vehicle (10); and a second data group, by using an inter-vehicle communication between the own vehicle (10) and each of the other vehicles (k), along with data to identify the each of the other vehicles (k) sending the second data group, the second data group including a plurality of data (ts$_k$(n), tp$_k$(n)) representing a driving status amount of the each of the other vehicles (k), and

**characterized in**

a specifying member configured to specify the preceding vehicle **in that** it is configured to: obtain a plurality of kinds of a maximum speed difference (A1), a maximum speed mean square error (A2), a maximum difference (A3) of acceleration change, a minimum speed correlation coefficient (A4), an average speed correlation coefficient (A5), a maximum distance change error (A6), and a maximum mean square error (A7) of relative position as statistical amounts representing a data similarity between the first data group and the second data group of the each of the other vehicles (k); to obtain a preceding vehicle probability for each of the obtained statistical amounts based on the each of the obtained statistical amounts and a predetermined look-up table (Map$\alpha$1, Map$\alpha$2, Map$\alpha$3, Map$\alpha$4, Map$\alpha$5, Map$\alpha$6, Map$\alpha$7) defined in advance for the each of the statistical amounts; to calculate a final preceding vehicle probability for the each of the other vehicles (k) based on the obtained preceding vehicle probabilities; and to specify the preceding vehicle based on the final preceding vehicle probability.

2. The preceding vehicle detection device according to claim 1,

the data included in the first data group including a time-series data relating to speed of the one of the other vehicles (k) running right in front of the own vehicle (10), and the data included in the second data group including a time-series data relating to speed of the each of the other vehicles (k).

3. The preceding vehicle detection device according to claim 2,

the specifying member being configured to obtain more than two kinds of statistical amounts relating to speed, as the statistical amounts representing the data similarity, based on the time-series data relating to speed of the other vehicle (k) included in the first data group and the time-series data relating to speed of the each of the other vehicles (k) included in the second data group.

4. The preceding vehicle detection device according to claim 3,

the specifying member being configured:

to obtain specific values in a time-series manner, based on the time-series data relating to speed of the other vehicle (k) included in the first data group and the time-series data relating to speed of the each of the other vehicles (k) included in the second data group, absolute values of the specific values decreasing with increasing similarity between the time-series data included in the first data group and the time-series data of the each of the other vehicles (k) included in the second data group; and
to obtain a maximum value among the values obtained in a time-series manner as one of the more than two kinds of statistical amounts relating to speed.

5. The preceding vehicle detection device according to claim 3 or claim 4,

the specifying member being configured:

to obtain correlation coefficients between the time-series data included in the first data group and the time-series data of the each of the other vehicles included in the second data group in a time-series manner, based on the time-series data relating to speed of the other vehicle (k) included in the first data group and the time-series data relating to speed of the each of the other vehicles (k) included in the second data group; and
to obtain a minimum value of the correlation coefficients obtained in a time-series manner as one of the more than two kinds of statistical amounts relating to speed.

6. The preceding vehicle detection device according to any one of claim 1 to claim 5,

the specifying member being configured:

to calculate a value based on a product of the preceding vehicle probabilities obtained for the each of the other vehicles (k) as the final preceding vehicle probability for the each of the other vehicles (k); and
to determine, upon the final preceding vehicle probability being smaller than a predetermined threshold value, the other vehicle corresponding to the final preceding vehicle probability not being the preceding vehicle.

7. The preceding vehicle detection device according to any one of claim 1 to claim 5,

the specifying member being configured:

to calculate a value based on a product of the preceding vehicle probabilities obtained for the each of the other vehicles (k) as the final preceding vehicle probability for the each of the other vehicles (k); and

to specify, upon only one of the final preceding vehicle probabilities being larger than a predetermined threshold value, the other vehicle corresponding to the final preceding vehicle probability larger than the predetermined threshold value being the preceding vehicle.

8. The preceding vehicle detection device according to claim 6 or claim 7,
the specifying member being configured to calculate the final preceding vehicle probability for the each of the other vehicles (k) by correcting the product of the preceding vehicle probabilities for the each of the other vehicles (k) depending on a number of data of same kind included in the time-series data for the each of the other vehicles (k).

9. The preceding vehicle detection device according to claim 6 or claim 7,
the specifying member being configured to correct the predetermined threshold value for the each of the other vehicles (k) depending on a number of data of same kind included in the time-series data for the each of the other vehicles (k).

10. The preceding vehicle detection device according to claim 6 or claim 7,
the specifying member being configured:

to calculate a change amount of the speed per predetermined time of the other vehicle running right in front of the own vehicle (10) based on the time-series data relating to speed of the other vehicle (k) included in the first data group; and
to calculate the final preceding vehicle probability for the each of the other vehicles (k) by correcting the product of the preceding vehicle probabilities for the each of the other vehicles (k) depending on the calculated change amount.

11. The preceding vehicle detection device according to claim 6 or claim 7,
the specifying member being configured:

to calculate a change amount of the speed per predetermined time of the other vehicle running right in front of the own vehicle (10) based on the time-series data relating to speed of the other vehicle (k) included in the first data group; and
to correct the predetermined threshold value for the each of the other vehicles (k) depending on the calculated change amount.

12. The preceding vehicle detection device according to any one of claim 1 or claim 11,
the data obtaining member being configured:

to obtain a change amount of a speed per predetermined time of the other vehicle running right in front of the own vehicle (10) by using the detection device (31, 40, 50) of the own vehicle (10); and
to increase a frequency of obtaining the first data group and the second data group with increasing amount of the change amount.


**Patentansprüche**

1. Vorausfahrfahrzeugerfassungsvorrichtung, die ein vorausfahrendes Fahrzeug, das sich direkt vor einem eigenen Fahrzeug (10) fortbewegt, aus einer Vielzahl anderer Fahrzeuge (k) spezifiziert, die sich um das eigene Fahrzeug (10) herum fortbewegen,
wobei die Vorrichtung aufweist
eine Datenerlangungseinrichtung, die dazu eingerichtet ist, um zu erlangen: eine erste Datengruppe unter Verwendung einer Erfassungsvorrichtung (31, 40, 50) des eigenen Fahrzeugs (10), wobei die erste Datengruppe eine Vielzahl von Daten (ps(n), pp(n)) umfasst, die ein Fahrzustandsausmaß eines der anderen Fahrzeuge (k) repräsentieren, das sich direkt vor dem eigenen Fahrzeug (10) fortbewegt; und eine zweite Datengruppe unter Verwendung einer Zwischenfahrzeugkommunikation zwischen dem eigenen Fahrzeug (10) und jedem der anderen Fahrzeuge (k) zusammen mit Daten, um das jede der anderen Fahrzeuge (k) zu identifizieren, das die zweite Datengruppe sendet, wobei die zweite Datengruppe eine Vielzahl von Daten ($ts_k(n)$, $tp_k(n)$) umfasst, die ein Fahrzustandsausmaß des jeden der anderen Fahrzeuge (k) repräsentieren, und
**gekennzeichnet ist durch**
eine Spezifiziereinrichtung, die dazu eingerichtet ist, um das vorausfahrende Fahrzeug **dadurch** zu spezifizieren, dass diese dazu eingerichtet ist, um: eine Vielzahl von Arten einer Maximalgeschwindigkeitsdifferenz (A1), eines Maximalgeschwindigkeitsquadratmittelfehlers (A2), einer Maximaldifferenz (A3) einer Beschleunigungsänderung, eines Minimalgeschwindigkeitskorrelationskoeffizienten (A4), eines Durchschnittsgeschwindigkeitskorrelationskoeffizienten (A5), eines Maximalabstandsänderungsfehlers (A6), und eines Maximalquadratmittelfehlers (A7) einer Relativposition als eine Datenähnlichkeit zwischen der ersten Datengruppe und der zweiten Datengruppe des jeden der anderen Fahrzeuge (k) repräsentierende statistische Ausmaße zu erlangen; eine Vorausfahrfahrzeugwahrscheinlichkeit für jedes der erlangten statistischen Ausmaße basierend auf dem jeden der erlangten statistischen Ausmaße und einer für den jeden der statistischen Ausmaße vorab definierten vorbestimmten Nachschlagetabelle (Map$\alpha$1, Mapa2, Mapa3, Mapa4, Mapa5, Mapa6, Mapa7) zu erlangen; eine finale Vorausfahrfahrzeugwahrscheinlichkeit für das jede der anderen Fahrzeuge (k) basierend auf den erlangten Vorausfahrfahrzeugwahrscheinlichkeiten zu berechnen; und um das Vorausfahrfahrzeug basierend auf der finalen Vorausfahrfahrzeugwahrscheinlichkeit zu spezifizieren.

2. Vorausfahrfahrzeugerfassungsvorrichtung nach Anspruch 1, wobei
die in der ersten Datengruppe enthaltenen Daten Zeitreihendaten bezüglich Geschwindigkeit des einen der anderen Fahrzeuge (k), das sich direkt vor dem eigenen Fahrzeug (10) fortbewegt, umfasst, und die in der zweiten Datengruppe enthaltenen Daten Zeitreihendaten bezüglich Geschwindigkeit des jeden der anderen Fahrzeuge (k) umfasst.

3. Vorausfahrfahrzeugerfassungsvorrichtung nach Anspruch 2, wobei
die Spezifiziereinrichtung dazu eingerichtet ist, um mehr als zwei Arten von statistischen Ausmaßen bezüglich Geschwindigkeit als die die Datenähnlichkeit repräsentierenden statistischen Ausmaße basierend auf den in der ersten Datengruppe enthaltenen Zeitreihendaten bezüglich Geschwindigkeit des anderen Fahrzeugs (k) und den in der zweiten Datengruppe enthaltenen Zeitreihendaten bezüglich Geschwindigkeit des jeden der anderen Fahrzeuge (k) zu erlangen.

4. Vorausfahrfahrzeugerfassungsvorrichtung nach Anspruch 3, wobei
die Spezifiziereinrichtung dazu eingerichtet ist, um
spezifische Werte in einer Zeitreihenweise basierend auf den in der ersten Datengruppe enthaltenen Zeitreihendaten bezüglich Geschwindigkeit des anderen Fahrzeugs (k) und den in der zweiten Datengruppe enthaltenen Zeitreihendaten bezüglich Geschwindigkeit des jeden der anderen Fahrzeuge (k) zu erlangen, wobei sich Absolutwerte der spezifischen Werte mit sich erhöhender Ähnlichkeit zwischen den in der ersten Datengruppe enthaltenen Zeitreihendaten und den in der zweiten Datengruppe enthaltenen Zeitreihendaten des jeden der anderen Fahrzeuge (k) verringern, und um
einen Maximalwert unter den in einer Zeitreihenweise erlangten Werten als einen der mehr als zwei Arten von statistischen Ausmaßen bezüglich Geschwindigkeit zu erlangen.

5. Vorausfahrfahrzeugerfassungsvorrichtung nach Anspruch 3 oder 4, wobei
die Spezifiziereinrichtung dazu eingerichtet ist, um
Korrelationskoeffizienten zwischen den in der ersten Datengruppe enthaltenen Zeitreihendaten und den in der zweiten Datengruppe enthaltenen Zeitreihendaten des jeden der anderen Fahrzeuge in einer Zeitreihenweise basierend auf den in der ersten Datengruppe enthaltenen Zeitreihendaten bezüglich Geschwindigkeit des anderen Fahrzeugs (k) und den in der zweiten Datengruppe enthaltenen Zeitreihendaten bezüglich Geschwindigkeit des jeden der anderen Fahrzeuge (k) zu erlangen, und um
einen Minimalwert der in einer Zeitreihenweise erlangten Korrelationskoeffizienten als einen der mehr als zwei Arten von statistischen Ausmaßen bezüglich Geschwindigkeit zu erlangen.

6. Vorausfahrfahrzeugerfassungsvorrichtung nach einem der Ansprüche 1 bis 5, wobei
die Spezifiziereinrichtung dazu eingerichtet ist, um
einen Wert basierend auf einem Produkt der für das jede der anderen Fahrzeuge (k) erlangten Vorausfahrfahrzeugwahrscheinlichkeiten als die finale Vorausfahrfahrzeugwahrscheinlichkeit für das jede der anderen Fahrzeuge (k) zu berechnen, und um,
wenn die finale Vorausfahrfahrzeugwahrscheinlichkeit geringer als ein vorbestimmter Schwellenwert ist, das andere Fahrzeug entsprechend der finalen Vorausfahrfahrzeugwahrscheinlichkeit als nicht das vorausfahrende Fahrzeug seiend zu bestimmen.

7. Vorausfahrfahrzeugerfassungsvorrichtung nach einem der Ansprüche 1 bis 5, wobei
die Spezifiziereinrichtung dazu eingerichtet ist, um
einen Wert basierend auf einem Produkt der für das jede der anderen Fahrzeuge (k) erlangten Vorausfahrfahrzeugwahrscheinlichkeiten als die finale Vorausfahrfahrzeugwahrscheinlichkeit für das jede der anderen Fahrzeuge (k) zu berechnen, und um,

wenn nur eine der finalen Vorausfahrfahrzeugwahrscheinlichkeiten größer als ein vorbestimmter Schwellenwert ist, das andere Fahrzeug entsprechend der finalen Vorausfahrfahrzeugwahrscheinlichkeit größer als der vorbestimmte Schwellenwert als das vorausfahrende Fahrzeug seiend zu spezifizieren.

8. Vorausfahrfahrzeugerfassungsvorrichtung nach Anspruch 6 oder 7, wobei
die Spezifiziereinrichtung dazu eingerichtet ist, um die finale Vorausfahrfahrzeugwahrscheinlichkeit für das jede der anderen Fahrzeuge (k) durch Korrektur des Produkts der Vorausfahrfahrzeugwahrscheinlichkeiten für das jede der anderen Fahrzeuge (k) abhängig von einer Anzahl von Daten der gleichen Art, die in den Zeitreihendaten für das jede der anderen Fahrzeuge (k) enthalten sind, zu berechnen.

9. Vorausfahrfahrzeugerfassungsvorrichtung nach Anspruch 6 oder 7, wobei
die Spezifiziereinrichtung dazu eingerichtet ist, um den vorbestimmten Schwellenwert für das jede der anderen Fahrzeuge (k) abhängig von einer Anzahl von Daten der gleichen Art, die in den Zeitreihendaten für das jede der anderen Fahrzeuge (k) enthalten sind, zu korrigieren.

10. Vorausfahrfahrzeugerfassungsvorrichtung nach Anspruch 6 oder 7, wobei
die Spezifiziereinrichtung dazu eingerichtet ist, um
ein Änderungsausmaß der Geschwindigkeit pro vorbestimmter Zeit des anderen sich direkt vor dem eigenen Fahrzeug (10) fortbewegenden Fahrzeugs basierend auf den in der ersten Datengruppe enthaltenen Zeitreihendaten bezüglich Geschwindigkeit des anderen Fahrzeugs (k) zu berechnen, und um
die finale Vorausfahrfahrzeugwahrscheinlichkeit für das jede der anderen Fahrzeuge (k) durch Korrektur des Produkts der finalen Vorausfahrfahrzeugwahrscheinlichkeiten für das jede der anderen Fahrzeuge (k) abhängig von dem berechneten Änderungsausmaß zu berechnen.

11. Vorausfahrfahrzeugerfassungsvorrichtung nach Anspruch 6 oder 7, wobei
die Spezifiziereinrichtung dazu eingerichtet ist, um
ein Änderungsausmaß der Geschwindigkeit pro vorbestimmter Zeit des anderen sich direkt vor dem eigenen Fahrzeug (10) fortbewegenden Fahrzeugs basierend auf den in der ersten Datengruppe enthaltenen Zeitreihendaten bezüglich Geschwindigkeit des anderen Fahrzeugs (k) zu berechnen, und um
den vorbestimmten Schwellenwert für das jede der anderen Fahrzeuge (k) abhängig von dem berechneten Änderungsausmaß zu korrigieren.

12. Vorausfahrfahrzeugerfassungsvorrichtung nach einem der Ansprüche 1 oder 11, wobei
die Datenerlangungseinrichtung dazu eingerichtet ist, um
ein Änderungsausmaß einer Geschwindigkeit pro vorbestimmter Zeit des anderen sich direkt vor dem eigenen Fahrzeug (10) fortbewegenden Fahrzeugs unter Verwendung der Erfassungsvorrichtung (31, 40, 50) des eigenen Fahrzeugs (10) zu erlangen, und um
eine Frequenz eines Erlangens der ersten Datengruppe und der zweiten Datengruppe mit einem sich erhöhenden Ausmaß des Änderungsausmaßes zu erhöhen.


**Revendications**

1. Dispositif de détection de véhicule précédent spécifiant un véhicule précédent circulant à droite devant un véhicule hôte (10) parmi une pluralité d'autres véhicules (k) circulant autour du véhicule hôte (10),
le dispositif comprend :

un élément d'obtention de données configuré pour obtenir : un premier groupe de données au moyen d'un dispositif de détection (31, 40, 50) du véhicule hôte (10), le premier groupe de données comprenant une pluralité de données (ps(n), pp(n)) représentant une valeur de statut de conduite d'un des autres véhicules (k) circulant à droite devant le véhicule hôte (10) ; et un deuxième groupe de données, au moyen d'une communication de véhicule à véhicule entre le véhicule hôte (10) et chacun des autres véhicules (k), conjointement avec des données pour identifier chacun des autres véhicules (k) envoyant le deuxième groupe de données, le deuxième groupe de données comportant une pluralité de données ($ts_k(n)$, $tp_k(n)$) représentant une valeur de statut de conduite de chacun des autres véhicules (k), et
**caractérisé par**

un élément de spécification configuré pour spécifier le véhicule précédent en ce qu'il est configuré : pour obtenir une pluralité de types parmi une différence de vitesse maximale (A1), une erreur quadratique moyenne de vitesse maximale (A2), une différence maximale (A3) de modification d'accélération, un coefficient de corrélation de vitesse minimale (A4), un coefficient de corrélation de vitesse moyenne (A5), une erreur de modification de distance maximale (A6), et une erreur quadratique moyenne maximale (A7) de position relative en tant que valeurs statistiques représentant une similarité de données entre le premier groupe de données et le deuxième groupe de données de chacun des autres véhicules (k) ; pour obtenir une probabilité de véhicule précédent pour chacune des valeurs statistiques obtenues sur la base de chacune des valeurs statistiques obtenues et d'une table de correspondance prédéterminée (Map$\alpha$1, Map$\alpha$2, Map$\alpha$3, Map$\alpha$4, Map$\alpha$5, Map$\alpha$6, Map$\alpha$7) définie par avance pour chacune des valeurs statistiques ; pour calculer une probabilité de véhicule précédent final pour chacun des autres véhicules (k) sur la base des probabilités de véhicule précédent obtenues ; et pour spécifier le véhicule précédent sur la base de la probabilité de véhicule précédent final.

2. Dispositif de détection de véhicule précédent selon la revendication 1,
les données incluses dans le premier groupe de données comportant des données chronologiques relatives à la vitesse d'un des autres véhicules (k) circulant à droite devant le véhicule hôte (10), et les données incluses dans le deuxième groupe de données comportant des données chronologiques relatives à la vitesse de chacun des autres véhicules (k).

3. Dispositif de détection de véhicule précédent selon la revendication 2,
l'élément de spécification étant configuré pour obtenir plus de deux types de valeurs statistiques relatives à la vitesse, en tant que valeurs statistiques représentant la similarité de données, sur la base des données chronologiques relatives à la vitesse de l'autre véhicule (k) incluses dans le premier groupe de données et des données chronologiques relatives à la vitesse de chacun des autres véhicules (k) incluses dans le deuxième groupe de données.

4. Dispositif de détection de véhicule précédent selon la revendication 3,
l'élément de spécification étant configuré :

pour obtenir des valeurs spécifiques d'une manière chronologique, sur la base des données chronologiques relatives à la vitesse de l'autre véhicule (k) incluses dans le premier groupe de données et des données chronologiques relatives à la vitesse de chacun des autres véhicules (k) incluses dans le deuxième groupe de données, les valeurs absolues des valeurs spécifiques diminuant à mesure qu'augmente la similarité entre les données chronologiques incluses dans le premier groupe de données et les données chronologiques de chacun des autres véhicules (k) incluses dans le deuxième groupe de données ; et
pour obtenir une valeur maximale parmi les valeurs obtenues d'une manière chronologique en tant qu'un de plus de deux types de valeurs statistiques relatives à la vitesse.

5. Dispositif de détection de véhicule précédent selon la revendication 3 ou la revendication 4,
l'élément de spécification étant configuré :

pour obtenir des coefficients de corrélation entre les données chronologiques incluses dans le premier groupe de données et les données chronologiques de chacun des autres véhicules incluses dans le deuxième groupe de données d'une manière chronologique, sur la base des données chronologiques relatives à la vitesse de l'autre véhicule (k) incluses dans le premier groupe de données et des données chronologiques relatives à la vitesse de chacun des autres véhicules (k) incluses dans le deuxième groupe de données ; et
pour obtenir une valeur minimale des coefficients de corrélation obtenus d'une manière chronologique en tant qu'un de plus de deux types de valeurs statistiques relatives à la vitesse.

6. Dispositif de détection de véhicule précédent selon l'une quelconque des revendications 1 à 5,
l'élément de spécification étant configuré :

pour calculer une valeur sur la base d'un produit des probabilités de véhicule précédent obtenues pour chacun des autres véhicules (k) en tant que probabilité de véhicule précédent final pour chacun des autres véhicules (k) ; et
pour déterminer, lorsque la probabilité de véhicule précédent final est inférieure à une valeur seuil prédéterminée, que l'autre véhicule correspondant à la probabilité de véhicule précédent final n'est pas le véhicule précédent.

**7.** Dispositif de détection de véhicule précédent selon l'une quelconque des revendications 1 à 5, l'élément de spécification étant configuré :

pour calculer une valeur sur la base d'un produit des probabilités de véhicule précédent obtenues pour chacun des autres véhicules (k) en tant que probabilité de véhicule précédent final pour chacun des autres véhicules (k) ; et

pour spécifier, lorsqu'une seule des probabilités de véhicule précédent final est supérieure à une valeur seuil prédéterminée, que l'autre véhicule correspondant à la probabilité de véhicule précédent final supérieure à la valeur seuil prédéterminée est le véhicule précédent.

**8.** Dispositif de détection de véhicule précédent selon la revendication 6 ou 7, l'élément de spécification étant configuré pour calculer la probabilité de véhicule précédent final pour chacun des autres véhicules (k) en corrigeant le produit des probabilités de véhicule précédent pour chacun des autres véhicules (k) en fonction d'un certain nombre de données de même type incluses dans les données chronologiques pour chacun des autres véhicules (k).

**9.** Dispositif de détection de véhicule précédent selon la revendication 6 ou 7, l'élément de spécification étant configuré pour corriger la valeur seuil prédéterminée pour chacun des autres véhicules (k) en fonction d'un certain nombre de données de même type incluses dans les données chronologiques pour chacun des autres véhicules (k).

**10.** Dispositif de détection de véhicule précédent selon la revendication 6 ou 7, l'élément de spécification étant configuré :

pour calculer une valeur de modification de la vitesse par temps prédéterminé de l'autre véhicule circulant à droite devant le véhicule hôte (10) sur la base des données chronologiques relatives à la vitesse de l'autre véhicule (k) incluses dans le premier groupe de données ; et

pour calculer la probabilité de véhicule précédent final pour chacun des autres véhicules (k) en corrigeant le produit des probabilités de véhicule précédent pour chacun des autres véhicules (k) en fonction de la valeur de modification calculée.

**11.** Dispositif de détection de véhicule précédent selon la revendication 6 ou 7, l'élément de spécification étant configuré :

pour calculer une valeur de modification de la vitesse par temps prédéterminé de l'autre véhicule circulant à droite devant le véhicule hôte (10) sur la base des données chronologiques relatives à la vitesse de l'autre véhicule (k) incluses dans le premier groupe de données ; et

pour corriger la valeur seuil prédéterminée pour chacun des autres véhicules (k) en fonction de la quantité de modification calculée.

**12.** Dispositif de détection de véhicule précédent selon l'une quelconque de la revendications 1 ou de la revendication 11, l'élément d'obtention de données étant configuré :

pour obtenir une valeur de modification d'une vitesse par temps prédéterminé de l'autre véhicule circulant à droite devant le véhicule hôte (10) au moyen du dispositif de détection (31, 40, 50) du véhicule hôte (10) ; et

pour augmenter une fréquence d'obtention du premier groupe de données et du deuxième groupe de données à mesure qu'augmente la valeur de la valeur de modification.

FIG. 1

Start — 200

Obtaining and storing kinds of data
(ps(n), $ts_k$(n), pp(n), $tp_k$(n)) — 205

Calculating
Maximum speed difference A1 — 210

Preceding vehicle probability
α1 ← Mapα1(A1) — 215

Calculating
Maximum speed mean square error A2 — 220

Preceding vehicle probability
α2 ← Mapα2(A2) — 225

Calculating
Maximum difference A3
of acceleration change amount — 230

Preceding vehicle probability
α3 ← Mapα3(A3) — 235

Calculating
Minimum speed correlation coefficient A4 — 240

Preceding vehicle probability
α4 ← Mapα4(A4) — 245

Calculating
Average speed correlation coefficient A5 — 250

Preceding vehicle probability
α5 ← Mapα5(A5) — 255

Calculating
Maximum distance change error A6 — 260

Preceding vehicle probability
α6 ← Mapα6(A6) — 265

Calculating
Maximum mean square error A7
of relative position — 270

Preceding vehicle probability
α7 ← Mapα7(A7) — 275

Calculating
Final preceding vehicle probability αk
αk←α1·α2·α3·α4·α5·α6·α7 — 280

Has αk been calculated
for all communicating
vehicles? — 285  No

Yes

Is there only one αk
equal to or more than
threshold value αth? — 290  No

Yes

Determining
a vehicle having αk equal to or
more than threshold value αth
is preceding vehicle — 294

Determining
there is no
preceding vehicle — 292

Return — 295

FIG. 2

FIG. 3

FIG. 4

Preceding vehicle
probability α1

Mapα1(A1)

100(%)

50(%)

0(%)

0    A1th1    A1th2    A1th3    Large

Maximum speed difference A1(km/h)

Similarity High ◄———————► Similarity Low

## FIG. 5

Preceding vehicle
probability αx

Range1    Range2    Range3    Range4

100(%)

Mapαx(Ax)

50(%)

0(%)

Axth0    Axth1    Axth2    Axth3    Axth4

Condition High ◄——— Statistical amount A ———► Condition Low

Similarity High ◄———————————► Similarity Low

## FIG. 6

FIG. 7

FIG. 8

Preceding vehicle
probability α5

Mapα5(A5)

100(%)

50(%)

0(%)

1    A5th1    A5th2    A5th3    0

Average speed correlation coefficient A5

Similarity High ◄──────────► Similarity Low

## FIG. 9

Long

Second
Embodiment

Number of time-series data
Inter-vehicle communication time

Mapβ

β1

β2

β3

β4

β: large

$1 \geq \beta1 > \beta2 > \beta3 > \beta4 > 0$

0

0    Large

Change amount of preceding vehicle speed
obtained with own sensor

## FIG. 10

From step 275

Second
Embodiment

╭─280

Calculating
Final preceding vehicle probability αk
αk←α1·α2·α3·α4·α5·α6·α7

╭─1110

Determining compensation rate β

╭─1120

Final preceding vehicle probability
αk ←β·αk

╭─285

Has αk been calculated
for all communicating
vehicles?   →No→ To step 210

Yes

To step 290

FIG. 11

Third
Embodiment

From step 285

1210

Determining compensation rate γ

1220

Threshold value
αth ←γ·αth

To step 290

# FIG. 12

FIG. 13

**EP 2 843 645 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010086269 A
- WO 2011124957 A1